# EUROPÄISCHE PATENTSCHRIFT

(11) **EP 0 384 959 B1**
(45) Veröffentlichungstag und Bekanntmachung des Hinweises auf die Patenterteilung: **29.12.1993**
(21) Anmeldenummer: 89118932.6
(22) Anmeldetag: 12.10.1989
(51) Int. Cl.: F23N 1/00, F23N 1/08

(54) **Regler für einen nicht modulierenden Brenner**
Regulator for a non-modulating burner
Régulateur pour un brûleur non modulant

(30) Priorität: 02.03.1989 CH 784/89
(43) Veröffentlichungstag der Anmeldung: 05.09.1990
(73) Patentinhaber: Landis & Gyr Business Support AG, 6301 Zug (CH)
(72) Erfinder: Ries, Peter, CH-5734 Reinach (CH)
(74) Vertreter: Müller, Hans-Jürgen, Dipl.-Ing.

(56) Entgegenhaltungen:
- DE-A- 3 345 705
- DE-A- 3 410 764
- GB-A- 2 161 962
- PT ELECTROTECHNIEK, ELEKTRONICA. vol. e33, no. 7, 1978, RIJSWIJK NL Seite 373 - 381; klein etal: "energiebesparing en besturing van de huisinstallie met een microprocessor"

## Beschreibung

Die Erfindung bezieht sich auf einen Regler für einen nicht modulierenden Brenner gemäß dem Oberbegriff des Anspruchs 1.

Ein Regler der im Oberbegriff des Anspruchs 1 genannten Art ist aus der DE-PS 25 28 749 bekannt. Zur Minimierung der Wärmeverluste wird die Temperatur des Kessels in Abhängigkeit von der Außentemperatur gesteuert. In Abhängigkeit von der Sollwertabweichung der Kesselwassertemperatur wird der nicht modulierende Brenner ein- und ausgeschaltet.

Die Steuerung der Kesselwassertemperatur in Abhängigkeit von der Außentemperatur geht von der Überlegung aus, daß der Wärmebedarf bei tieferer Außentemperatur größer ist als bei höherer Außentemperatur. Unberücksichtigt bleibt dabei allerdings, daß der tatsächliche Wärmebedarf jedoch davon durchaus abweichen kann, sei es, weil der Bedarf an warmem Brauchwasser kaum außentemperaturabhängig ist, sei es, weil die Zahl der zu beheizenden Räume schwanken oder das Fremdwärmeaufkommen wechseln kann. Deshalb wird bei einer außentemperaturabhängigen Kesselregelung meist mehr Energie als nötig bereitgestellt, also Energie vergeudet.

Um diesen unnötigen Energieverbrauch zu vermeiden, ist in der DE-OS 35 24 230 vorgeschlagen worden, aus dem Schaltzyklus des Raumthermostaten ein Signal für den tatsächlichen Wärmebedarf zu gewinnen und damit den Brenner zu steuern. Auch hier bleibt aber der Wärmebedarf durch die Brauchwasserbereitung wie auch der Wärmebedarf solcher Räume, die nicht durch einen separaten Raumthermostaten geregelt werden, unberücksichtigt.

Der Erfindung liegt die Aufgabe zugrunde, einen Regler für einen nicht modulierenden Brenner zu schaffen, der die Kesselwassertemperatur möglichst genau an die jeweilige aktuelle Belastung des Kessels anpaßt.

Die genannte Aufgabe wird erfindungsgemäß durch die Merkmale des Vorrichtungsanspruchs 1 und des Verfahrensanspruchs 5 gelöst. Vorteilhafte Ausgestaltungen ergeben sich aus den Unteransprüchen.

Nachfolgend wird ein Ausführungsbeispiel der Erfindung anhand der Zeichnung näher erläutert.

Es zeigen:
- Fig. 1: ein Blockschaltbild eines Reglers und
- Fig. 2: eine Kennlinie für einen Sollwertgeber.

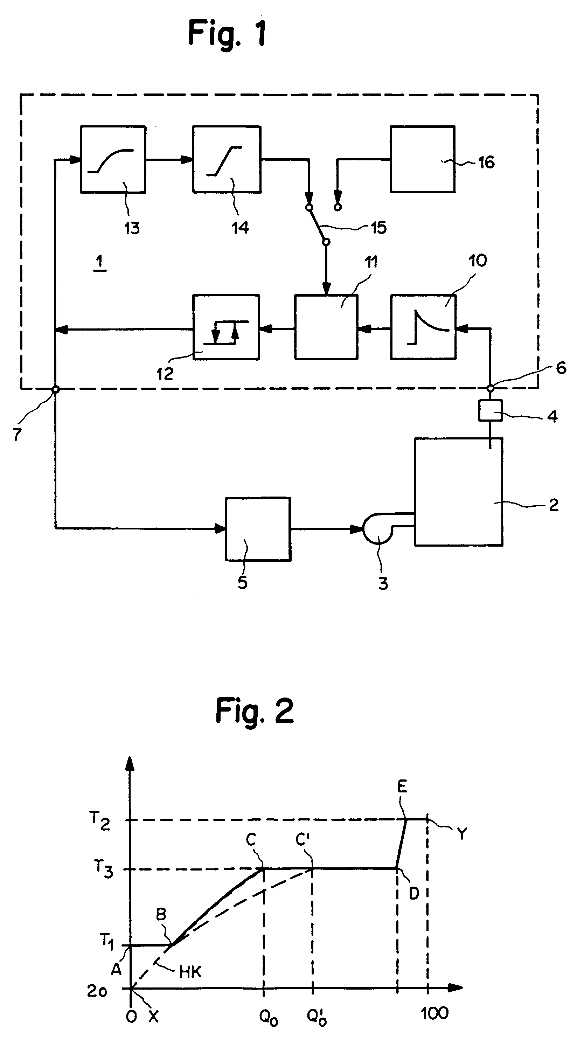

In der Fig. 1 bedeutet 1 einen Regler zum Regeln eines Heizkessels 2, der durch einen Brenner 3 beheizt wird. Die Kesselwassertemperatur wird durch einen Kesselfühler 4 ermittelt. Der Brenner 3 wird von einem Feuerungsautomaten 5 ein- und ausgeschaltet.

Der Regler 1 besitzt einen Eingang 6, an den der Kesselfühler 4 angeschlossen ist, und einen Ausgang 7, an den der Feuerungsautomat 5 in Serie zu einem nicht dargestellten Sicherheitsbegrenzer angeschlossen ist.

Der innere Aufbau des Reglers 1 umfaßt gegebenenfalls ein Korrekturglied 10, dessen Eingang mit dem Eingang 6 verbunden ist. Sein Ausgang ist mit dem ersten Eingang eines Komparators 11 verbunden. Das Korrekturglied 10 ist verzichtbar, so daß der Eingang 6 auch direkt mit dem ersten Eingang des Komparators 11 verbunden sein kann. Der Ausgang des Komparators 11 führt zum Eingang eines Zweipunktschalters 12, dessen Ausgang mit dem Ausgang 7 des Reglers 1 verbunden ist.

Der Ausgang des Zweipunktschalters 12 ist außerdem mit dem Eingang eines Rechenglieds 13 verbunden, dessen Ausgang mit dem Eingang eines Sollwertrechners 14 verbunden ist. Der Ausgang des Sollwertrechners 14 ist über einen Schalter 15 mit dem zweiten Eingang des Komparators 11 verbunden.

Ein Sollwertgeber 16 ist an den Schalter 15 so angeschlossen, daß der zweite Eingang des Komparators 11 je nach Stellung des Schalters 15 entweder mit dem Sollwertrechner 14 oder mit dem Sollwertgeber 16 verbunden ist.

Nachfolgend wird die Funktionsweise der beschriebenen Vorrichtung näher erläutert. Die Temperatur des Wärmeträgermediums im Heizkessel 2 wird mit dem Kesselfühler 4 erfaßt. Dessen Signal gelangt auf den Eingang 6 des Reglers 1. Von hier gelangt dieses Signal entweder direkt zum ersten Eingang des Komparators 11 oder zum Korrekturglied 10, dessen Ausgang mit dem ersten Eingang des Komparators 11 verbunden ist.

Das Korrekturglied 10 korrigiert das Signal des Kesselfühlers 4. Der Sinn dieser vorteilhaften Maßnahme wird später erläutert. Ob nun das Korrekturglied 10 vorhanden ist oder nicht, immer liegt am ersten Eingang des Komparators 11 ein Signal an, daß den Istwert der Kesseltemperatur repräsentiert. Am zweiten Eingang des Komparators 11 liegt ein Signal für den Sollwert der Kesseltemperatur an. Am Ausgang des Komparators 11 liegt ein Signal an, das die Differenz zwischen dem Istwert und dem Sollwert der Kesseltemperatur repräsentiert.

Dieses Signal gelangt auf den Eingang des Zweipunktschalters 12. Das Ausgangssignal dieses Zweipunktschalters 12 wechselt von "AUS" nach "EIN", wenn der Istwert der Kesseltemperatur unter den um die Schaltdifferenz verminderten Sollwert der Kesseltemperatur fällt, und wechselt von "EIN" nach "AUS", wenn der Istwert der Kesseltemperatur über den Sollwert der Kesseltemperatur steigt. Das Ausgangssignal des Zweipunktschalters 12 gelangt auf den Eingang des Feuerungsautomaten 5, der den Betrieb des Brenners 3 entsprechend steuert.

Das Ausgangssignal des Zweipunktschalters 12 gelangt außerdem auf den Eingang des Rechengliedes 13, das ein mit dem Einschaltverhältnis des Zweipunktschalters 12 korreliertes Signal erzeugt. In ihm wird eine Zeitmittelung vorgenommen, die beispielsweise exponentiell sein kann. Durch die Zeitmittelung wird ein Signal erzeugt, daß dem Einschaltverhältnis des Brenners 3 in einer zurückliegenden Zeitperiode entspricht.

Dieses Einschaltverhältnis stellt eine Kenngröße für die Kesselbelastung dar. Das Rechenglied 13 kann vorteilhaft als Verzögerungsglied erster Ordnung ausgeführt sein, wobei die Zeitkonstante etwa eine Stunde beträgt. Auf diese Weise wird im Rechenglied 13 ein Signal erzeugt, das der Kesselbelastung und damit dem Wärmebedarf entspricht.

Das am Ausgang des Rechengliedes 13 anliegende Signal wird auf den Eingang des Sollwertrechners 14 gegeben. In diesem Sollwertrechner 14 wird aus dem Signal für die Kesselbelastung bzw. den Wärmebedarf ein Sollwert für die Kesseltemperatur ermittelt. Da mit steigendem Wärmebedarf eine erhöhte Kesselbelastung einhergeht, ist es zweckmäßig, mit steigender Kesselbelastung den Sollwert der Kesseltemperatur zu erhöhen. Dies kann beispielsweise durch einen linearen Zusammenhang charakterisiert werden.

Vorteilhaft ist es jedoch, keinen linearen Zusammenhang zu wählen, sondern den Sollwert der Kesseltemperatur gemäß der Fig. 2 von der Kesselbelastung Q abhängig zu machen. Auf der Abszissenachse ist die Kesselbelastung in Prozent aufgetragen, wobei 100 % der Nennleistung des Heizkessels 2 entspricht. Auf der Ordinatenachse ist die Solltemperatur des Kesselwassers aufgetragen. Die Leistung Q₀ und die Temperatur T₃ sind die Auslegungsdaten der Heizungsanlage, z. B. für eine minimale Außentemperatur von -20 Grad Celsius. Diesen Daten entspricht der Punkt C. Zwischen dem Ursprung X tei 20 Grad Celsius und Kesselleistung Null und dem Punkt C verläuft die als gestrichelte Linie gezeichnete Heizkurve HK mit einer der Heizungsbauart angepaßten Krümmung.

Um Abgaskondensation zu vermeiden, wird von den Kesselherstellern gefordert, daß die Temperatur im Heizkessel 2 den Wert T₁ nicht unterschreitet. Deshalb ist der Sollwertrechner 14 so ausgelegt, daß die Kesseltemperatur mindestens den Wert T₁ annimmt. Der Sollwertrechner 14 gibt deshalb für kleine Kesselleistungen Sollwerte ab, die nicht der Heizkurve HK entsprechen, sondern gemäß der Linie AB für Leistungen unterhalb des Punktes B immer dem Wert T₁ entsprechen. Zwischen den Punkten B und C werden Sollwerte abgegeben, die genau der Heizkurve HK folgen.

Die Auslegungstemperatur T₃ ist in der Regel nicht identisch mit der maximal für den Heizkessel 2 zulässigen Temperatur T₂, sondern liegt tiefer. Der Heizkessel 2 besitzt somit noch Leistungsreserven. Diese Leistungsreserve ist sinnvoll nützbar einerseits zur Brauchwasserbereitung, andererseits zur Schnellaufheizung nach einer Nachtabsenkperiode. Es ist deshalb vorteilhaft, diese Leistungsreserve zu nützen, indem der Sollwert der Kesseltemperatur auf den maximal zulässigen Wert T₂ erhöht wird, wenn die Kesselbelastung gegen den Nennwert der Leistung strebt. Beispielsweise kann der Sollwert auf T₂ angehoben werden, wenn 90 % der Kesselnennleistung überschritten werden.

Die maximal zulässige Temperatur T₂ ist im übrigen so ausgelegt, daß bei plötzlicher Lastabschaltung ein in jeder Heizeinrichtung dieser Art vorhandener Sicherheitstemperaturbegrenzer nicht anspricht.

Im Sollwertgeber 16 (Fig. 1) ist der Sollwert für jene Kesseltemperatur abgelegt, die bei Bereitung von Brauchwasser eingestellt sein soll. Die bekannte Brauchwasser-Vorrangschaltung ist beim beschriebenen Regler 1 ebenfalls vorhanden. Ein nicht dargestellter Temperaturfühler im Brauchwasserspeicher steuert dabei den Schalter 15. Wird keine Brauchwassererwärmung verlangt, so befindet sich der Schalter 15 in der in der Fig. 1 gezeigten Lage, bei der der Ausgang des Sollwertrechners 14 mit dem zweiten Eingang des Komparator 11 verbunden ist. Wird Brauchwassererwärmung verlangt, so befindet sich der Schalter 15 in seiner zweiten Lage, bei der der Sollwertgeber 16 mit dem zweiten Eingang des Komparators 11 verbunden ist.

Es ist vorteilhaft, zwischen den Eingang 6 und den ersten Eingang des Komparators 11 das Korrekturglied 10 zu schalten, um das Signal des Kesselfühlers 4 zu korrigieren. Es ist bekannt, daß Temperaturfühler auf eine Temperatur des Mediums, das sie erfassen, verzögert reagieren. Insbesondere bei Heizkesseln mit kleinem Wasserinhalt kann diese Trägheit des Temperaturfühlers zu Problemen führen, indem bei plötzlichem Abschalten der Last die Temperatur überschwingt und durch das Ansprechen des Sicherheitstemperaturbegrenzers die Heizanlage abgeschaltet wird. Als Korrekturglied 10 wird ein Funktionselement mit Proportional-Differential-Verhalten verwendet, dessen Vorhaltezeit auf die Zeitkonstante des Kesselfühlers 4 abgestimmt ist.

Heizungsanlagen müssen auf das Gebäude, dessen Wärmeversorgung sie dienen, abgestimmt werden. Oftmals wünschen die Benützer, Korrekturen an der Reglereinstellung vornehmen zu können, wenn es ihnen zu warm oder zu kalt ist. Deshalb ist es vorteilhaft, am Regler 1 die Möglichkeit zu bieten, die Sollwertvorgabe für den Heizkreislauf zu korrigieren. Beim beschriebenen Regler 1 kann das in vorteilhafter Weise dadurch geschehen, daß Mittel vorhanden sind, um die Kennlinie (Fig. 2) des Sollwertgebers 14 zu verändern.

Da der Sollwert der Kesseltemperatur vom durch die Kesselleistung repräsentierten Wärmebedarf abhängig ist, ist es möglich, daß in dem Falle, da der Benützer mehrere Räume gar nicht beheizt, der Wärmebedarf insgesamt klein ist, die daraus resultierende niedrigere Kesseltemperatur für eine ausreichende Beheizung eines einzelnen Raumes nicht ausreicht. Auch der umgekehrte Fall ist denkbar. Deshalb soll der Benützer in der Lage sein, den Zusammenhang zwischen augenblicklicher Kesselleistung und Solltemperatur des Heizkessels 2 zu verändern. Dies geschieht zweckmäßigerweise dadurch, daß der Punkt C der Kennlinie parallel zur Abszisse verschoben und dadurch die Lage der Kurve zwischen den Punkten B und C verschoben wird. Als Beispiel für eine solche Benutzerkorrektur ist in der Fig. 2 der Punkt C' mit dem zugehörigen Kurvenabschnitt BC' eingezeichnet. Vorteilhaft kann die Verschiebung des Punktes C auch durch externe Signale, beispielsweise durch Raumthermostaten, automatisch gesteuert werden. Die auslegungsgemäße Leistung Q₀ wird dadurch automatisch korrigiert.

Es hat sich gezeigt, daß der beschriebene Regler den Vorteil bietet, daß die Gesamtkosten der Heizanlage dadurch verringert werden können, daß gegenüber dem Bekannten auf einen Außentemperaturfühler und dessen meist aufwendige Installation verzichtet werden kann. Dieser Vorteil spielt vor allem bei der Nachrüstung von Altbauten mit einer modernen Heizung eine große Rolle. Überraschenderweise hat sich gezeigt, daß das Regelverhalten eines solchen Reglers demjenigen eines witterungsgeführten Reglers durchaus entspricht und daß bei stark wechselndem Fremdwärmeeinfluß mit einem beschriebenen Regler bessere Regeleigenschaften und zudem noch Einsparungen an Brennstoff möglich sind.

In vorteilhafter Weise kann man die Funktion des beschriebenen Reglers 1 auch unabhängig von den zuvor dargestellten Funktionselementen wie Korrekturglied 10, Rechenglied 13 usw. beispielsweise in einem digitalen Regler verwirklichen, wobei die Funktionen der einzelnen Funktionselemente durch ein Verfahren darstellende Regelalgorithmen realisiert werden. Bei einem solchen Verfahren wird die Kesselwassertemperatur dadurch geregelt, daß der Sollwert der Kesselwassertemperatur vom durch die Kesselbelastung repräsentierten Wärmebedarf abhängig gemacht wird. In vorteilhafter Weise geschieht dies dadurch, daß ein mit dem Einschaltverhältnis des Brenners 3 korreliertes Sinal gebildet und aus diesem Signal der Sollwert der Kesselwassertemperatur bestimmt wird.

## Patentansprüche

1. Regler für einen nicht modulierenden Brenner, mit Mitteln (1) zur Anpassung der Kesselwassertemperatur an den Wärmebedarf, mit einem Eingang zum Anschluß eines Kesselfühlers (4) und einem diesem nachgeschalteten Zweipunktschalter (12), dadurch gekennzeichet, daß ein das Ausgangssignal des Zweipunktschalters (12) auswertendes Rechenglied (13) vorhanden ist, das ein mit dem Einschaltverhältnis des Zweipunktschalters (12) korreliertes Signal erzeugt, daß diesem Rechenglied (13) ein Sollwertrechner (14) für die Kesseltemperatur nachgeschaltet ist, daß der Ausgang des Sollwertrechners (14) auf einen Komparator (11) geschaltet ist, der Soll- und Istwert der Kesseltemperatur vergleicht, und daß der Ausgang des Komparators (11) auf den Zweipunktschalter (12) wirkt.

2. Regler nach Anspruch 1, dadurch gekennzeichnet, daß zwischen einen Eingang (6) zum Anschluß eines Kesselfühlers (4) und den Komparator (11) ein Korrekturglied (10) geschaltet ist, das ein Funktionselement mit Proportional-Differential-Verhalten umfaßt und eine Vorhaltezeit aufweist, die auf die Zeitkonstante des Kesselfühlers (4) abgestimmt ist.

3. Regler nach Anspruch 1 oder 2, dadurch gekennzeichnet, daß der Sollwertrechner (14) aus dem mit dem Einschaltverhältnis des Zweipunktschalters (12) korrelierten Signal einen Sollwert für die Kesseltemperatur erzeugt, der unterhalb der Auslegungsdaten (Q₀, T₃) einer Heizkurve (HK) entspricht, mindestens aber einen zur Vermeidung von Abgaskondensation geforderten Wert (T₁) annimmt, oberhalb der Auslegungsdaten (Q₀, T₃) einen konstanten Wert (T₃) hat, jedoch oberhalb von etwa 90 % der Nennleistung des Heizkessels (2) auf die maximal zulässige Temperatur (T₂) angehoben ist.

4. Regler nach Anspruch 3, dadurch gekennzeichnet, daß die auslegungsgemäße Leistung (Q₀; C, C') durch externe Signale automatisch korrigiert wird.

5. Verfahren zur Regelung der Kesselwassertemperatur eines Heizkessels (2) mit einem nicht modulierenden Brenner (3), der beim Überschreiten eines Sollwertes der Kesselwassertemperatur ausgeschaltet und beim Unterschreiten eingeschaltet wird,
**dadurch gekennzeichnet,**
daß ein mit dem Einschaltverhältnis des Brenners (3) korreliertes Signal gebildet und der Sollwert der Kesseltemperatur von diesem die Kesselbelastung (Q) repräsentierenden Signal abhängig gemacht wird.

## Claims

1. A regulator for a non-modulating burner having bans (1) for matching the boiler water temperature to the heat requirement, an input for the connection of a boiler sensor (4), and an on-off switch (12) which is connected on the output side thereof, characterised in that there is a computing member (13) which evaluates the output signal of the on-off switch (12) and which produces a signal which is correlated with the switch-on ratio of the on-off switch (12), that connected on the output side of said computing member (13) is a reference value computing means (14) for the boiler temperature, that the output of the reference value computing means (14) is switched to a comparator (11) which compares reference and actual values of the boiler temperature, and that the output of the comparator (11) acts on the on-off switch (12).

2. A regulator according to claim 1 characterised in that connected between an input (6) for the connection of a boiler sensor (4) and the comparator (11) is a correction member (10) which includes a functional element with a proportional-differential characteristic and has a derivative rate time which is matched to the time constant of the boiler sensor (4).

3. A regulator according to claim 1 or claim 2 characterised in that the reference value computing bans (14) produces from the signal which is correlated with the switch-on ratio of the on-off switch (12) a reference value for the boiler temperature, which below the design data (Q₀, T₃) corresponds to a heating curve (HK) but at least assumes a value (T₁) required to avoid flue gas condensation, and above the design data (Q₀, T₃) is of a constant value (T₃) but above about 90% of the nominal output of the heating boiler (2) is raised to the maximum admissible temperature (T₂).

4. A regulator according to claim 3 characterised in that the design output (Q₀; C, C') is automatically corrected by external signals.

5. A method of regulating the boiler water temperature of a heating boiler (2) having a non-modulating burner (3) which is switched off when a reference value in respect of the boiler water temperature is exceeded and which is switched on when the boiler water temperature falls below the reference value, characterised in that a signal which is correlated with the switch-on ratio of the burner (3) is formed and the reference value in respect of the boiler temperature is made dependent on said signal which represents the boiler loading (Q).

## Revendications

1. Régulateur d'un brûleur sans modulation, comprenant des moyens (1) d'adaptation de la température de l'eau de la chaudière à la consommation de chaleur, qui comprennent une entrée destinée à être connectée à un capteur (4) monté sur la chaudière ainsi qu'un commutateur à deux positions (12) monté en aval de ce capteur, caractérisé en ce qu'il comprend un circuit de calcul (13) qui analyse le signal de sortie du commutateur à deux positions (12) et qui génère un signal qui est en corrélation avec le mode de commutation du commutateur à deux positions (12), en ce qu'une calculatrice de consigne (14) de la température de la chaudière est montée en aval de ce circuit de calcul (13), en ce que la sortie de la calculatrice de consigne (14) est branchée sur un comparateur (11) qui compare la valeur de consigne et la valeur réelle de la température de la chaudière et en ce que la sortie du comparateur (11) agit sur le commutateur à deux positions (12).

2. Régulateur selon la revendication 1, caractérisé en ce qu'un organe correcteur (10) monté entre l'entrée (6) destinée à être connectée à un capteur (4) de la chaudière et le comparateur (11) comprend un élément fonctionnel à allure proportionnelle et différentielle et qui a une constante de temps qui est accordée à la constante de temps du capteur (4) monté sur la chaudière.

3. Régulateur selon la revendication 1 ou 2, caractérisé en ce que la calculatrice de consigne (14) génère à partir du signal qui est en corrélation avec le mode de commutation du commutateur à deux positions (12) une consigne de la température de la chaudière qui correspond à une courbe de chauffage (HK) lorsque les données sont en dessous de celles de conception (Q₀, T₃), mais qui prend au moins une valeur (T₁) qui est nécessaire pour éviter une condensation des gaz d'échappement, qui a une valeur constante (T₃) lorsque les données sont au-dessus de celles de conception (Q₀, T₃), mais qui est élevée à la température maximale admissible (T₂) lorsque la puissance de la chaudière de chauffage est supérieure à environ 90° de sa puissance nominale.

4. Régulateur selon la revendication 3, caractérisé en ce que la puissance conforme à la conception (Qₒ ; C, C') est corrigée automatiquement par des signaux extérieurs.

5. Procédé de réglage de la température de l'eau d'une chaudière de chauffage (2) équipée d'un brûleur (3) sans modulation qui est mis hors service en cas de dépassement d'une consigne de la température de l'eau de la chaudière et qui est mis en service lorsque cette température descend sous celle de consigne, caractérisé en ce qu'un signal qui est en corrélation avec le mode de marche du brûleur (3) est formé et la consigne de la température de la chaudière est rendue dépendante de ce signal représentant la charge (Q) de la chaudière.
